(19) Europäisches Patentamt / European Patent Office / Office européen des brevets

(11) **EP 4 164 405 B1**

(12) **EUROPÄISCHE PATENTSCHRIFT**

(45) Veröffentlichungstag und Bekanntmachung des Hinweises auf die Patenterteilung:
**31.07.2024   Patentblatt 2024/31**

(21) Anmeldenummer: **21733756.7**

(22) Anmeldetag: **11.06.2021**

(51) Internationale Patentklassifikation (IPC):
**A23K 10/30** (2016.01)   **A23K 20/105** (2016.01)
**A23K 20/142** (2016.01)   **A23K 50/10** (2016.01)
**A23K 50/15** (2016.01)

(52) Gemeinsame Patentklassifikation (CPC):
**A23K 20/142; A23K 20/105; A23K 50/10;**
Y02P 60/87

(86) Internationale Anmeldenummer:
**PCT/EP2021/065778**

(87) Internationale Veröffentlichungsnummer:
**WO 2021/254900 (23.12.2021 Gazette 2021/51)**

(54) **ERHÖHUNG DER METABOLISCHEN ENERGIE IN FUTTERMITTELN**

INCREASING THE METABOLIC ENERGY IN ANIMAL FEED

AUGMENTATION DE L'ÉNERGIE MÉTABOLIQUE DANS L'ALIMENTATION ANIMALE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.06.2020   DE 102020115667**

(43) Veröffentlichungstag der Anmeldung:
**19.04.2023   Patentblatt 2023/16**

(73) Patentinhaber: **Alzchem Trostberg GmbH**
**83308 Trostberg (DE)**

(72) Erfinder:
- **SANS, Jürgen**
**83308 Trostberg (DE)**
- **WINKLER, Stephan**
**83352 Altenmarkt (DE)**

(74) Vertreter: **Weickmann & Weickmann PartmbB**
**Postfach 860 820**
**81635 München (DE)**

(56) Entgegenhaltungen:
**CN-A- 105 876 185      DE-C- 738 131**
**US-A- 3 681 504      US-A1- 2017 007 562**
**US-B2- 8 501 810**

- **LI S.Y. ET AL: "Effects of guanidinoacetic acid supplementation on growth performance, nutrient digestion, rumen fermentation and blood metabolites in Angus bulls", ANIMAL, vol. 14, no. 12, 1 January 2020 (2020-01-01), GB, pages 2535 - 2542, XP055841496, ISSN: 1751-7311, DOI: 10.1017/S1751731120001603**

**Beschreibung**

Die vorliegende Erfindung betrifft die Verwendung von Guanidin, Guanidinoessigsäure und Arginin oder deren Salze zur Erhöhung der metabolischen Energie eines Futtermittels für Wiederkäuer.

Die Gabe von günstigen alternativen Futtermitteln als Ersatz oder in Ergänzung von ortsüblichen verfügbaren Futtermitteln ist schon lange, insbesondere in Zeiten der mangelnden Verfügbarkeit von ortsüblichen Futtermitteln, Gegenstand der landwirtschaftlichen Forschung. So wurde bereits in DE 738131 ein Eiweißersatzstoff vorgeschlagen, der bei fehlender Eiweißversorgung mit natürlichem ortsüblichem Futter verwendet werden kann. Nachteilig an diesem Verfahren ist, dass auf das zur Verfügung stehende Futter kein Einfluss genommen wird. Die Ausnutzung des zur Verfügung stehenden Futters im Magen und im Verdauungsstrakt der Tiere wird nicht verbessert.

Eine Effizienzsteigerung bei der Haltung von Nutztieren, insbesondere Hühner, Legehennen und Broiler, wurde durch Additive erreicht. Es ist schon lange bekannt, dass Kreatinylphosphat ADP zu ATP phosphoryliert und so einen wichtigen Beitrag zum Energiestoffwechsel in der Zelle leistet. So wird in EP 1758463 B1 sowie in US 8,501,810 B2 beschrieben, dass die Supplementierung der Vorläuferverbindung von Kreatinylphosphat, nämlich mit Guanidinoessigsäure, bei vorwiegend vegetarischen Diäten zur Verbesserung der Futteraufnahme, zur Steigerung der Mastleistung, des Muskelfleischansatzes, der Fleischqualität und/oder der Reproduktionsleistung beiträgt. Nachteilig an diesem Verfahren ist, dass auch hier kein direkter Einfluss auf das Futtermittel im Verdauungstrakt genommen wird. Die Ausnutzung des zur Verfügung stehenden Futters im Magen und im Verdauungsstrakt der Tiere wird nicht verbessert, d.h. die metabolische Energie nicht erhöht.

US 3,681,504 A beschreibt ein Verfahren und eine Zusammensetzung zur Behebung von Schluckstörungen von Wiederkäuern. Dabei wird durch Verabreichung von einer oder mehreren Verbindungen ausgewählt aus Guanidin, 1-Aminoguanidin, 1,3-Aminoguanidin und pharmazeutisch annehmbaren Salzen davon die ösophagiale Rinne der Tiere geschlossen. CN 105876185 A beschreibt ein Futtermittel für Rinder, welches die Aufnahme von Nährstoffen verbessern und die Wachstumsgeschwindigkeit von Rindern erhöhen soll.

Auch die Verbesserung der Futteraufnahme bei Nutztieren, wie beispielsweise Kühen, Schweinen oder Hühnern, wurde aufgrund der großen ökonomischen Bedeutung oft untersucht. Da die Nutztiere schnell wachsen sollen oder schnell viele Eier legen sollen oder eine möglichst große Menge nahrhafte Milch geben sollen, muss in jedem Fall eine große Energiemenge in das Tier hineingebracht werden. Um dies zu erreichen wurde zum Beispiel versucht bei Milchkühen die Futteraufnahmefrequenz zu steigern. So wird in EP 2939545 B1 dargestellt, dass durch Zugabe von Grünfutteraromen zum Futter das Futteraufnahmeverhalten von Milchkühen verbessert werden kann. Nachteilig an diesem Verfahren ist jedoch, dass eine größere Menge Futter von den Tieren gefressen wird. Auch hier wird die Ausnutzung des zur Verfügung stehenden Futters im Magen und im Verdauungstrakt nicht verbessert.

Weiterhin sind in EP 3479700 A1 Kaffee-Komponenten beschrieben, die die Futtereffizienz verbessern. Diese Kaffee-Komponenten müssen aufwendig mit Hilfe eines Bakteriums fermentiert werden. Nachteilig an diesem Verfahren ist somit, dass ein zusätzlicher Behandlungsschritt der Fermentation notwendig ist.

Somit sind gemäß dem Stand der Technik zwar zahlreiche Methoden bekannt, die durch den Einsatz von Additiven zu Futtermitteln die Nutztiere schneller zu mehr Wachstum bringen. Dies kann durch Futterersatzstoffe, durch Aromastoffe oder durch körpereigene Substanzen geschehen, die den Zellstoffwechsel beeinflussen. Daneben ist eine Reihe von Additiven bekannt, die Mängel in der Futtermittelmischung ausgleichen sollen. Beispielhaft seien hier Methionin, Lysin, Calcium- und andere Metallsalze und Vitamine genannt.

Für die ökonomisch und ökologisch dringendste Aufgabe, nämlich das Futter der Tiere für die Tiere ohne chemische oder mechanische Vorbehandlung besser verfügbar zu machen, existiert keine praktikable Lösung.

Somit liegt der vorliegenden Erfindung die Aufgabe zugrunde, ein Additiv zu identifizieren, welches in einer einfachen Anwendung ohne vorherigen äußerlichen zusätzlichen mechanischen oder thermischen Aufwand, d.h. direkt im Verdauungstrakt der Tiere wirkt und die Metabolische Energie eines gegebenen Futtermittels oder Futtermittelgemischs erhöht. Hierbei ist die Steigerung der Metabolischen Energie eines gegebenen Futtermittels gleichzusetzen mit der Förderung der Verdaubarkeit eines Futtermittels im Verdauungstrakt der Tiere.

Die gesamte Energie, die in einem Futtermittel enthalten ist, auch Brennwert genannt, ist die Bruttoenergie [BE]. Sie beinhaltet das gesamte energetische Potenzial des Futtermittels. Wird von der Bruttoenergie, die Energie, die über den Kot den Körper verlässt, abgezogen, so erhält man die Verdauliche Energie [VE]. Zieht man von der Verdaulichen Energie, die im Harn und Gärgasen enthaltenen Energien ab, so erhält man die Umsetzbare Energie, auch Metabolische Energie [ME] bzw. metabolisierbare Energie, genannt (Burgstaller G. (1999): Praktische Rinderfütterung, Landbuch Verlag, Hannover). Diese Metabolische Energie findet als Angabe Verwendung in der Fütterung von Wiederkäuern, wie Mast- und Aufzuchtrindern, Schafen und Ziegen.

In der Metabolischen Energie ist der Erhaltungsbedarf des Tieres noch enthalten. Wird dieser Erhaltungsbedarf, gemessen in Form von Stoffwechselwärme, von der Metabolischen Energie abgezogen, so erhält man die Nettoenergie, die für die Produktionsleistung zur Verfügung steht. Im Falle der Fütterung von Milchkühen wäre dies die Energie, die für die Milchbildung zur Verfügung steht. Diese wird dann bei der Milchfütterung Netto Energie Laktation genannt.

Bruttoenergie [BE] = Gesamtenergie im Futter

→ Abzüglich unverdauter Energie im Kot

Verdauliche Energie [VE]

→ Abzüglich der Energie in Gärgasen
→ Abzüglich der Energie im Harn

Umsetzbare Energie [ME] = Metabolische Energie

Schema 1: Aufteilung der Energie in einem Futtermittel nach Burgstaller (1999)

Die Metabolische Energie ist demzufolge eine wichtige Größe, die ein Futtermittel oder eine Futtermittelmischung charakterisiert. Sie ist sowohl wichtig, um sicherzustellen, dass den Tieren immer die benötigte Energie zur Verfügung gestellt wird, als auch für den Handel mit Futtermitteln. Da es sehr aufwändig wäre und eines hohen experimentellen Aufwandes bedarf, diese gemäß der obigen Herleitung zu bestimmen, wurden einfache Methoden gesucht, um die Metabolische Energien von Futtermitteln oder Futtermittelmischungen einfach auf Basis von relativ leicht zugänglichen Laboranalysen zu ermitteln.

Eine Methode zur Bestimmung der Metabolischen Energie (ME) von Futtermitteln folgt der untenstehende Gleichung. Diese Gleichung wurde seitens der Gesellschaft für Ernährungsphysiologie [https://gfefrankfurt.files.wordpress.com/2018/08/me-prediction-compound feeds deutsch wk.pdf, Formel S. 3] empfohlen und ist seit dem 01.09.2010 vom Gesetzgeber ins Futtermittelrecht übernommen. Demnach wird die Metabolische Energie für Mischfutter futtermittelrechtlich bindend durch folgende Formel berechnet:

$$
\begin{aligned}
\text{ME, MJ/kg TM} = \quad & 7{,}17 \\
& - 0{,}01171 \times \quad \text{Rohasche [g/kg TM]} \\
& + 0{,}00712 \times \quad \text{Rohprotein [g/kg TM]} \\
& + 0{,}01657 \times \quad \text{Rohfett [g/kg TM]} \\
& + 0{,}00200 \times \quad \text{Stärke [g/kg TM]} \\
& - 0{,}00202 \times \quad \text{ADForg * [g/kg TM]} \\
& + 0{,}06463 \times \quad \text{Gasbildung [ml/200 mg TM]}
\end{aligned}
$$

* ADForg = Säure-Detergenzien-Fasern, aschefrei; TM: Trockenmasse

Positive Beiträge zur Metabolischen Energie liefern die Summanden Rohproteingehalt, Rohfettgehalt, Stärkegehalt und die Gasbildungsrate, gemessen nach dem Hohenheimer Futterwerttest (HFT) (siehe z.B. VDLUFA-Verlag, 8. Erg. 2013, Methodenbuch III, 25.1). Negative Beiträge zur Metabolischen Energie liefern die Summanden Rohaschegehalt und der Gehalt an Säure-Detergentien-Fasern ($ADF_{org}$). Dies ist wenig verwunderlich, da die Ascheanteile letztlich die anorganischen Salze repräsentieren, aus denen keine Energie gewonnen werden kann. Die Säure-Detergentien-Fasern ($ADF_{org}$) repräsentieren Zellulose und Lignin, die für die Tiere schwer verdaulich oder nicht verdaulich sind und daher gemäß der obigen Formel einen negativen Beitrag zur Metabolischen Energie eines Futtermittels leisten.

Die Parameter Rohasche, Rohprotein, Rohfett, Stärke, $ADF_{org}$ werden direkt an Futtermittelproben ermittelt. Diese Parameter sind bei einem gegebenen Futtermittel oder Futtermittelmischung unveränderlich und werden nicht von etwaigen Additiven, die dem Tier zusätzlich appliziert werden, beeinflusst.

Die Gasbildung nach dem HFT, simuliert die Vorgänge im Verdauungstrakt. Da bei dem HFT Pansenflüssigkeit zu einem Futtermittel oder Futtermittelgemisch gegeben wird und die Gasbildung innerhalb von 24 h gemessen wird, simuliert die Gasbildung die Vorgänge im Verdauungstrakt von Wiederkäuern. Dieser Wert kann durch Additive, die dem Tier verabreicht werden beeinflusst werden. Diese Additive könnten für sich allein, mit dem Trinkwasser oder idealerweise mit dem Futter direkt dem Tier verabreicht werden.

Gesucht wird demzufolge ein Additiv, das einem Futter oder einem Futtermittelgemisch zugesetzt wird und welches durch seine Zugabe zu einem Futter oder Futtermittelgemisch bewirkt, dass beim Hohenheimer Futterwerttest eine Steigerung der gebildeten Gasmenge erfolgt und damit eine Steigerung der Metabolischen Energie eines Futtermittels hervorruft.

Die Mehrmenge an gebildetem Gas bedeutet eine zusätzliche Mehrmenge an Metabolischer Energie, die aus einem Futter oder Futtermittelgemisch gewonnen wird und dem Tier zur Verfügung steht. Ein Additiv, das bei einem gegebenen Futter die Gasmenge im HFT steigert, verbessert demzufolge die Verdaulichkeit im Verdauungstrakt der Tiere.

Die der Erfindung zugrunde liegende Aufgabe wird durch eine Verwendung gemäß Anspruch 1 oder 2 gelöst. Die Erfindung betrifft somit die Verwendung einer Verbindung ausgewählt aus der Gruppe Guanidin, Guanidinoessigsäure und Arginin und deren Salze zur Erhöhung der Metabolischen Energie eines Futtermittels für Wiederkäuer enthaltend Stroh und/oder Mais; wobei die Verbindung dem Futtermittel in einer Menge von 0,01 bis 2 Gew.-% bezogen auf das Futtermittel zugegeben wird, dadurch gekennzeichnet, dass das Futtermittel mindestens 30 Gew.-% an Stroh und/oder Mais, bezogen auf das Gesamtgewicht des Futtermittels enthält. Weiterhin betrifft die Erfindung die Verwendung einer Verbindung ausgewählt aus der Gruppe Guanidin, Guanidinoessigsäure und Arginin und deren Salze zur Erhöhung der Metabolischen Energie eines Futtermittels enthaltend Stroh und/oder Mais im Verdauungstrakt von Wiederkäuern; wobei die Verbindung dem Futtermittel in einer Menge von 0,01 bis 2 Gew.-% bezogen auf das Futtermittel zugegeben wird, dadurch gekennzeichnet, dass das Futtermittel mindestens 30 Gew.-% an Stroh und/oder Mais, bezogen auf das Gesamtgewicht des Futtermittels enthält. Überraschender Weise wird durch die Zugabe von Guanidin, Guanidinoessigsäure oder Arginin zu einem Futtermittel für Wiederkäuer die Verdaubarkeit eines gegebenen Futtermittels oder Futtermittelgemisches im Verdauungstrakt von Wiederkäuern gefördert. Somit ist gemäß einer ersten Ausführung die Verwendung einer Verbindung ausgewählt aus der Gruppe umfassend Guanidin, Guanidinoessigsäure und Arginin und deren Salze zur Erhöhung der metabolischen Energie aus Futtermitteln für Wiederkäuer umfassend Stroh und/oder Mais Gegenstand der vorliegenden Erfindung. Gemäß einem nebengeordneten Gedanken ist somit auch die Verwendung einer Verbindung ausgewählt aus der Gruppe Guanidin, Guanidinoessigsäure und Arginin und deren Salze zur Erhöhung der metabolischen Energie eines Futtermittels enthaltend Stroh und/oder Mais im Verdauungstrakt von Wiederkäuern Gegenstand der vorliegenden Erfindung.

Vollkommen unerwartet wird aus den Futtermitteln selbst bei gleichzeitiger Supplementierung von Futtermittel und entweder Guanidin oder Guanidinoessigsäure oder Arginin im Vergleich zu einer Verdauung ohne Zugabe dieser Zusatzstoffe mehr metabolische Energie freigesetzt. Somit kann dem Wiederkäuer bei Verabreichung von ein und derselben Menge Futtermittel durch die Zugabe von Guanidin, Guanidinoessigsäure oder Arginin mehr metabolische Energie aus einer Futterration zur Verfügung gestellt werden. Diese zusätzliche Energiefreisetzung ist alleine auf die Zugabe von Guanidin, Guanidinoessigsäure oder Arginin zurückzuführen, wobei die Energie nicht aus der Verbindung selbst resultiert.

Vollkommen überraschend ist, dass diese zusätzliche Energie nicht aus den Zusatzstoffen selbst resultiert. So konnte gezeigt werden, dass GAA im Pansen eines Wiederkäuers nicht abgebaut wird (vgl. Beispiele).

Guanidinoessigsäure (Kurzform GAA) gemäß der vorliegenden Erfindung bedeutet N-(Aminoiminomethyl)-2-aminoethansäure (CAS-Nr. 352-97-6, Summenformel $C_3H_7N_3O_2$) und ist auch als Guanidinoacetat, Glycocyamin, N-Amidinoglycin, N-(Aminoiminomethyl)-glycin bekannt.

Arginin (Kurzform Arg) gemäß der vorliegenden Erfindung bedeutet $\alpha$-Amino-$\delta$-guanidinvaleriansäure in allen stereochemischen Formen und Gemischen hiervon (CAS-Nr. 74-79-3 - L-Arginin, CAS-Nr. 157-06-2 - D-Arginin, CAS-Nr. 7200-25-1 - Racemat, Summenformel C6H14N4O2).

Guanidin gemäß der vorliegenden Erfindung bedeutet Aminomethanamidin (CAS Nr. 113-00-8, Summenformel $CH_5N_3$) und ist auch als Iminoharnstoff bekannt.

Erfindungsgemäß bevorzugt ist die Verwendung von Guanidinoessigsäure (GAA) und/oder deren Salze zur Erhöhung der Metabolischen Energie eines Futtermittels für Wiederkäuer enthaltend Stroh und/oder Mais. Weiterhin bevorzugt ist die Verwendung von Guanidinoessigsäure (GAA) und deren Salze zur Erhöhung der Metabolischen Energie eines Futtermittels enthaltend Stroh und/oder Mais im Verdauungstrakt von Wiederkäuern. Metabolische Energie gemäß der vorliegenden Erfindung ist die gemäß dem Hohenheimer Futtermitteltest bestimmte Metabolische Energie eines Futtermittels.

Stroh gemäß der vorliegenden Erfindung bezeichnet ausgedroschene und trockene Halme und Blätter von Getreide, Ölpflanzen, Faserpflanzen oder Hülsenfrüchten.

Das grundsätzliche Ziel eines Futtertestes ist es, das Verhalten eines Futters im Verdauungsbereich zu bestimmen. Zur Simulation der Vorgänge im Verdauungsbereich gibt es verschiedene Methoden, die meist an die jeweilige Verdauung adaptiert sind. Beim Menschen und anderen Monogastern wird eine Probe meist zunächst beim pH-Wert des Magen und mit Magenenzymen für eine definierte Zeit und bei einer definierten Temperatur gelagert und anschließend die Produkte analysiert. Ein anerkannter Test für Futter von Wiederkäuern ist der Hohenheimer Futterwerttest, bei dem eine Futtermittelprobe mit Pansensaft vermischt wird und die Gasbildung bestimmt wird. Die Gasbildung leistet einen Beitrag zur metabolischen Energie eines Futters (siehe oben).

Somit ist gemäß einem weiterführenden Gedanken auch die Verwendung einer Verbindung ausgewählt aus der Gruppe umfassend Guanidin, Guanidinoessigsäure und Arginin und deren Salze zur Erhöhung der Gasbildung aus einem Futtermittel für Wiederkäuer Gegenstand der vorliegenden Erfindung.

Das primäre Ziel einer Fütterung von Nutztieren ist die maximale Ausnutzung der metabolischen Energie des Futters. Es wurde gezeigt, dass die Gasfreisetzung im HFT einen Beitrag zur Metabolischen Energie des Futters leistet. Daneben kann es auch Prozesse geben, die an einer hohen Gasfreisetzung aus Futtermittel interessiert sind. Dies sind beispielsweise die Gewinnung von Gasen direkt aus Pflanzen oder Pflanzenbestandteilen sowie aus Gülle. Da der Hauptbestandteil der Gülle aus dem Verdauungstrakt der Tiere kommt und dort die Enzyme der Pansenflüssigkeit vorhanden sind, kann durch die Zugabe von Guanidin, Guanidinoessigsäure und Arginin die Gasausbeute von Biogasanlagen gesteigert oder die Umsetzungsgeschwindigkeit von Gülle und Pflanzen und Pflanzenbestandteilen zu Gas gesteigert werden.

Gemäß der vorliegenden Erfindung können Guanidin, Guanidinoessigsäure und Arginin zur Erhöhung der metabolischen Energie eines Futtermittels verwendet werden. Hierbei können sowohl die genannten Verbindungen als solche als auch in Form ihrer Salze eingesetzt werden. Bevorzugt können als Salz dieser Verbindungen Salze aus der Gruppe der Alkalisalze, der Erdalkalisalze oder Hydrochloride eingesetzt werden.

Besonders bevorzugt werden Guanidinoessigsäure oder Salze davon, insbesondere Salze von Guanidinoessigsäure aus der Gruppe der Alkalisalze, der Erdalkalisalze oder der Hydrochloride eingesetzt.

Bevorzugt können diese Verbindungen oder deren Salze dem Futtermittel zugegeben werden und insbesondere den Wiederkäuern zusammen mit Stroh und/oder Mais verabreicht werden. Weiter bevorzugt kann das Stroh ausgewählt werden aus der Gruppe Gerstenstroh, Weizenstroh, Haferstroh, Roggenstroh, Triticalestroh, Hirsestroh, und/ oder der Mais in Form von Kolbenmais, Liesch-Kolben-Schrot, Maisschrot, Grünmais, Silomais, Silomais aus der Ganzpflanze verwendet werden.

Das Futtermittel für Wiederkäuer enthaltend Stroh und/oder Mais umfasst erfindungsgemäß mindestens 30 Gew.-%, bevorzugt mindestens 40 Gew.-% und noch mehr bevorzugt mindestens 50 Gew.-% an Stroh und/oder Mais, jeweils bezogen auf das Gesamtgewicht des Futtermittels. Noch mehr bevorzugt besteht das Futtermittel zu einem großen Teil oder im Wesentlichen aus Stroh und/oder Mais und umfasst mindestens 60 Gew.-%, insbesondere mindestens 70 Gew.-%, bevorzugt mindestens 80 Gew.-% und mehr bevorzugt mindestens 90 Gew.-% an Stroh und/oder Mais, jeweils bezogen auf das Gesamtgewicht des Futtermittels.

Dabei werden die erfindungsgemäßen Verbindungen oder deren Salze dem Futtermittel in einer Menge von 0,01 bis 2 Gew.-% bezogen auf das Futtermittel zugegeben. Besonders bevorzugt können die erfindungsgemäßen Verbindungen oder deren Salze dem Futtermittel in einer Menge von 0,05 bis 1,5 Gew.-% und ganz besonders bevorzugt in einer Menge von 0,05 bis 1,0 Gew.-% und noch mehr bevorzugt in einer Menge von 0,10 bis 1,0 Gew.-% jeweils bezogen auf das Futtermittel zugegeben werden.

Bevorzugt können die erfindungsgemäßen Verbindungen oder deren Salze dem Futtermittel vorzugsweise in einer Menge von 0,01 bis 2 Gew.-% bezogen auf das Stroh und/oder Mais zugegeben werden. Besonders bevorzugt können die erfindungsgemäßen Verbindungen oder deren Salze dem Stroh und/oder dem Mais in einer Menge von 0,05 bis 1,5 Gew.-% und ganz besonders bevorzugt in einer Menge von 0,05 bis 1,0 Gew.-% und noch mehr bevorzugt in einer Menge von 0,10 bis 1,0 Gew.-% jeweils bezogen auf das Stroh und/ oder den Mais zugegeben werden.

Die Applikation bzw. Applikationsform kann in jeglicher Form erfolgen. Bevorzugt ist jedoch eine Verwendung, in der die erfindungsgemäße Verbindung oder deren Salze dem Futtermittel in Form eines Granulats, Extrudats oder als Lösung beigemengt wird. Besonders bevorzugt ist jedoch eine Verwendung als Lösung. Ganz besonderes bevorzugt kann auch vorgesehen sein, dass die erfindungsgemäßen Verbindungen oder deren Salze auf ein Trägermaterial aufgebracht sind.

Die erfindungsgemäße Verwendung der Verbindungen aus der Gruppe Guanidin, Guanidinoessigsäure und Arginin und deren Salze, und insbesondere von Guanidinoessigsäure und deren Salze, hat sich bei der Fütterung von Wiederkäuern als sehr effektiv erwiesen. Diesen Tieren ist gemeinsam, dass sie im Verdauungstrakt ihres Körpers über einen Pansen verfügen. Somit ist die erfindungsgemäße Verwendung zunächst unbeschränkt bei jedem Wiederkäuer anwendbar. Bevorzugt kann die Verwendung jedoch bei Wiederkäuern aus der Gruppe der Rinder, Milchkühe, Schafe oder Ziegen erfolgen.

Die Erfindung umfasst in gleicher Weise ein Verfahren zur Erhöhung der Metabolischen Energie eines Futtermittels für Wiederkäuer enthaltend Stroh und/oder Mais, umfassend die Schritte

- Bereitstellen eines Futtermittels für Wiederkäuer enthaltend Stroh und/oder Mais,
- Zugeben einer Verbindung ausgewählt aus der Gruppe Guanidin, Guanidinoessigsäure und Arginin und deren Salzen zum Futtermittel, wobei die Verbindung dem Futtermittel in einer Menge von 0,01 bis 2 Gew.-%, bezogen auf das Futtermittel zugegeben wird;
- Verabreichen des Futtermittels an Wiederkäuer und
- Erhöhen der Metabolischen Energie des Futtermittels im Verdauungstrakt der Wiederkäuer; dadurch gekennzeichnet, dass das Futtermittel mindestens 30 Gew.-% an Stroh und/oder Mais, bezogen auf das Gesamtgewicht des Futtermittels enthält.

Die bevorzugten Ausgestaltungen für das erfindungsgemäße Verfahren sind wie hierin in den erfindungsgemäßen Verwendungen angegeben.

Die nachfolgenden Beispiele sollen das Wesen der Erfindung näher erläutern.

Beispiele

Zur Abschätzung der relativen Verdaulichkeit von Futtermitteln wurde der Hohenheimer Futterwerttest (HWT) [VDLUFA-Verlag, 8. Erg. 2013, Methodenbuch III, 25.1] eingesetzt. Beim HFT wird ein Futtermittel in einem Kolbenprober in gepuffertem Pansensaft dispergiert und 24 h bei 39 °C inkubiert. Das in dieser Zeit entstandene Gasvolumen wird gemessen und stellt den Gasbildungswert dar. Eine höhere Gasbildung steht für einen höheren Futterwert.

A) Untersuchte Futtermittel

Maissilage: Mais, der Sorte KWS Gunnario, Anbau 2019 Landkreis Altötting wurde mit einem Maishäcksler (Schnitthöhe 20 cm über Boden) geerntet und fachgerecht eingelagert und siliert. Die Probe für die Untersuchungen wurde 6 Monate nach der Einlagerung entnommen. Die Probenentnahmestelle war frisch in 70 cm Tiefe. Die Probe wurde bis zur Untersuchung in einem luftdichten Beutel gelagert. Wassergehalt (4 h, 103 °C): 9,0 %, Rohasche: 2,9 %.
Mais, Futtermais gequetscht, Fa. Kornkraft: Wassergehalt (4 h, 103 °C): 13,2 %; Rohasche: 1,2 %.
Gerstenstroh, Wintergerste, Sorte Padura, gehäckselt, maximale Länge < 1 cm, Anbau 2019 Landkreis Altötting: Wassergehalt (4 h, 103 °C): 8,8 %; Rohasche: 4,6 %.
Weizenstroh, Winterweizen, Sorte Boss, gehäckselt, maximale Länge < 1 cm, Anbau 2019 Landkreis Mühldorf: Wassergehalt (4 h, 103 °C): 8,6 %; Rohasche: 3,7 %.
Heu, 2. Schnitt 2019, Landkreis Traunstein, nachgetrocknet: Wassergehalt (4 h, 103 °C): 8,8 %; Rohasche: 6,5 %
Haferkörner, gedarrt, gepresst, getrocknet, Marke: Knusperone, Hersteller: H & J Brüggen KG, Wassergehalt (4 h, 103 °C): 8,4 %, Rohasche: 2,1 %

B) Verwendete Zusatzstoffe

| | | |
|---|---|---|
| • | Guanidinoessigsäure (GAA) (CAS 352-97-6) | Gehalt: 99 % (Sigma Aldrich) |
| • | Guanidinhydrochlorid (Guhy) (CAS 50-01-1) | Gehalt: ≥ 98,0 % (Merck GmbH) |
| • | 1,1,3,3-Tetramethylguanidin (TMG) (CAS 80-70-6) | Gehalt: 99 % (Sigma Aldrich) |
| • | Kreatin-Monohydrat (Kreatin) (CAS 6020-87-7) | Gehalt: ≥ 98,0 % (Merck GmbH) |
| • | L-Arginin (L-Arg) (CAS 74-79-3) | Gehalt: ≥ 98 % (Merck GmbH) |

C) Vorbereitung der Futtermittel

Von den verwendeten Zusatzstoffen wurde jeweils mit demineralisiertem Wasser eine wässrige Lösung mit einer Konzentration 4 g/l hergestellt. 100 g des jeweiligen Futtermittels wurden in einen Glaszylinder, 260 mm Durchmesser, gegeben und der Glaszylinder auf einen Vielkolbenschüttler (VKS 75 A control, Fa. Edmund Bühler GmbH) befestigt. Anschließend wurde der Vielkolbenschüttler auf eine Geschwindigkeit von 70 min$^{-1}$ eingestellt und die Menge an wässriger Lösung mit Hilfe eines haushaltsüblichen manuellen Druckwassersprayers auf das Futtersubstrat aufgebracht, bis die gewünschte Zielmenge an Additiv versprüht war. Das behandelte Futter wurde anschließend bei 50 °C im Vakuumtrockenschrank 24 getrocknet, um überschüssiges Wasser wieder zu entfernen. Um Auszuschließen, dass die Behandlung mit Wasser und das Trocknen bei erhöhter Temperatur im Vakuum einen Einfluss hat, wurden die Referenzfuttermittelproben mit demineralisiertem Wasser auf die gleiche Weise behandelt (= unbehandeltes Futtermittel).

D) Ergebnis der Untersuchung

Die Ergebnisse der Untersuchung sind in Tabelle 1 und Tabelle 2 zusammengestellt.

Tabelle 1: Gasbildung (HFT) [ml/ 200 mg] verschiedener Futtermittel; Referenzwert (= unbehandeltes Futtermittel) und Zusatzstoffe in verschiedenen Mengen (Gew.-% bezogen auf das Futtermittel)

| Futtermittel | Referenz | GAA | | | Guhy | L-Arginin | TMG | Kreatin |
|---|---|---|---|---|---|---|---|---|
| | | 0,05 Gew-% | 0,1 Gew-% | 1,0 Gew-% | 0,1 Gew-% | 0,1 Gew-% | 0,1 Gew-% | 0,1 Gew-% |
| Maissilage | 46,2 | | | 48,8 | | | | |
| Mais (Körner) | 57,7 | | | 58,7 | | | | |
| Stroh (Gerste) | 22,6 | 23,4 | 25,5 | 25,3 | 23,8 | 25,9 | 21,7 | 22,2 |
| Stroh (Weizen) | 17,3 | | 19,5 | 20,2 | | | | |
| Heu | 38,7 | | | 38,4 | | | | |
| Hafer (gepresst) | 56,6 | | 56,2 | 56,5 | | | | |

Tabelle 2: Absolute Erhöhung und prozentuale Erhöhung des Gasbildungswertes bei Zugabe von GAA zu verschiedenen Futtermitteln relativ zur Referenz

| Futtermittel | Referenz | 1,0 Gew-% GAA | Absolute Erhöhung des Gasbildungwertes | Prozentuale Erhöhung des Gasbildungwertes |
|---|---|---|---|---|
| | [ml/200 mg] | [ml/200 mg] | [ml/200 mg] | [%] |
| Maissilage | 46,2 | 48,8 | 2,6 | 5,63 |
| Mais (Körner) | 57,7 | 58,7 | 1,0 | 1,73 |
| Stroh (Gerste) | 22,6 | 25,3 | 2,7 | 11,95 |
| Stroh (Weizen) | 17,3 | 20,2 | 2,9 | 16,76 |
| Heu | 38,7 | 38,4 | -0,3 | -0,78 |
| Hafer (gepresst) | 56,6 | 56,5 | -0,1 | -0,18 |

E) Stabilität von GAA in Pansenflüssigkeit

Die Bestimmung der Stabilität von GAA in Pansenflüssigkeit wurde in Anlehnung an die Durchführung des HFT-Tests durchgeführt. Hierfür wurden in 50 ml Weithalsflaschen mit Schlitzdeckel im Schüttelwasserbasserbad inkubiert. (10 ml Pansensaft + 40 ml Puffer, 500 mg Futtereinwaage (Totale Mischration) und variierende Mengen GAA. Die Inkubationszeit betrug, 0 h, 8 h, 24 h. Anschließend wurde der Inhalt der Weithalsflasche in einen Plastikbecher überspült, gefriergetrocknet und die GAA-Menge in der gefriergetrockneten Probe ermittelt.

Tabelle 3: Stabilität von GAA im Pansen

| GAA-Einwaage [mg] | Inkubationszeit [h] | GAA-Menge analysiert | Wiederfindungsrate [%] |
|---|---|---|---|
| 9 | 0 | 9,90 | 110 |
| 10 | 0 | 9,94 | 99,4 |
| 10 | 0 | 9,79 | 97,9 |

(fortgesetzt)

| GAA-Einwaage [mg] | Inkubationszeit [h] | GAA-Menge analysiert | Wiederfindungsrate [%] |
|---|---|---|---|
| 10 | 8 | 9,83 | 98,3 |
| 10 | 8 | 98,63 | 86,3 |
| 10 | 8 | 10,07 | 100,7 |
| 10 | 24 | 10,14 | 101,4 |
| 10 | 24 | 9,61 | 96,1 |
| 10 | 24 | 11,24 | 112,4 |
| 40 | 0 | 40,06 | 100,15 |
| 40 | 0 | 39,08 | 97,7 |
| 39 | 0 | 38,41 | 98,49 |
| 40 | 8 | 38,60 | 96,5 |
| 40 | 8 | 39,15 | 97,88 |
| 40 | 8 | 38,36 | 95,9 |
| 40 | 24 | 38,51 | 96,28 |
| 40 | 24 | 39,02 | 97,55 |
| 40 | 24 | 39,46 | 98,65 |

Bei den Versuchen mit der niedrigen Einwaagemenge (10 mg GAA) treten analysenbedingt relativ große Schwankungen auf. Bei den Versuchen mit der höheren Einwaagemenge (40 mg GAA) wurden beim Blindversuch (0 h Inkubationszeit) im Mittel aus den 3 Versuchen 98,78 % des zugegebenen GAA wiedergefunden. Nach 8 h wurden im Mittel 96,76 % und nach 24 h 97,44 % des GAA wiedergefunden. Es ist also von einer zumindest nahezu vollständigen Stabilität von GAA in Pansenfluid auszugehen.

F) Ergebnisbewertung

Die Zugabe von GAA führte bei Maissilage, Mais, und den beiden Strohsorten zu einer Zunahme der gebildeten Gasmenge.

Beim Gerstenstroh wurde bis zu einer Additivierung mit 0,1 % GAA eine Steigerung der Gasbildung erzielt, nämlich von 22,6 ml/200 mg ohne Additivierung auf 23,4 ml/200 mg bei Zugabe von 0,05 % GAA und weiter auf 25,5 ml/200 mg bei Zugabe von 0,1 % GAA. Die weitere Erhöhung der zugegebenen Menge GAA von 0,1 % auf 1 % beim Gerstenstroh zeigt, dass damit keine weitere Erhöhung der gebildeten Gasmenge mehr erzielt wurde.

Beim Weizenstroh führte die Erhöhung der GAA-Menge von 0,1 % auf 1 % zu einer weiteren geringfügigen Erhöhung der Gasmenge von 19,5 ml/200 mg bei 0,1 % GAA auf 20,2 ml/200 mg bei 1 % GAA. Jedoch ist diese Erhöhung vergleichsweise gering.

Bei Maissilage war bei Zugabe von 1 % GAA die Steigerung der Gasmenge größer als bei Maiskörnern, denn sie stieg bei Maissilage von 46,2 ml/200 mg auf 48,8 ml/200 mg, d.h. um 2,6 ml/200 mg an, bei Körnermais von 57,7 ml/200 mg auf 58,7 ml/200 mg, d.h. nur um 1 ml/200 mg an.

Kein Anstieg der Gasbildung durch Additivierung mit GAA wurde festgestellt bei Heu (38,7 ml/200 mg bzw. 38,4 ml/200 mg und bei Hafer (gepresst) (56,6 ml/200 mg ohne Additivierung, 56,2 ml/200 mg bei Additivierung mit 0,1 % GAA, und 56,5 ml/200 mg bei Additivierung mit 1 % GAA

Bei Hafer und Heu ist offensichtlich kein Einfluss von GAA auf den HFT-Wert (Gasbildung) gegeben.

Exemplarisch wurde bei Gerstenstroh der Einfluss von anderen Guanidinen untersucht.

Ein positiver Effekt auf die Gasbildung wurde gefunden bei Zugabe von 0,1 % Guanidinhydrochlorid und von 0,1 % L-Arginin. Hier stieg die Gasbildung von 22,6 ml/200 mg bei der Referenzprobe auf 23,8 ml/200 mg bei Guanidinhydrochlorid bzw. 25,9 ml/200 mg bei Arginin an. Vollkommen überraschend kein Effekt auf die Gasbildung wurde bei Additivierung des Gerstenstrohs mit 1,1,3,3-Tetramethylguanidin und Kreatin gefunden.

Es überrascht zunächst, dass Kreatin keine Wirkung entfaltet, während bei Guanidinoessigsäure eine Wirkung sichtbar ist. Guanidinoessigsäure ist die biochemische Vorstufe zu Kreatin. Offensichtlich spielt dieser Effekt hier keine Rolle und es müssen andere Moleküleigenschaften vorliegen, die die Gasbildung beeinflussen.

Vergleicht man die Strukturen von Guanidinhydrochlorid, Guanidinoessigsäure und Arginin im Vergleich zu Kreatin und 1,1,3,3-Tetramethylguanidin, so erkennt man, das die Guanidineinheit bei ersteren unsubstituiert (Guanidinhydrochlorid) oder monosubstituiert (Guanidinoessigsäure und Arginin) vorliegt und bei den letztgenannten (Kreatin und 1,1,3,3-Tetramethylguanidin) eine zweifache Substitution an mindestens einem N-Atom vorliegt.

Ohne an die Theorie gebunden zu sein wird vermutet, dass es durch die Mehrfachsubstitution zu einer sterischen Abschirmung der Guanidineinheit kommt, so dass diese keine Wirkung entfalten kann. Möglicherweise, ohne an die Theorie gebunden zu sein, ist die Wirkung des unsubstituierten Guanidins bzw. der monosubstituierten Guanidinoessigsäure und des Arginins als chaotrope Verbindung zur Aufbrechung von Wasserstoffbrückenbindungen der entscheidende Faktor für die hier gefundenen Beobachtungen der vermehrten Gasfreisetzung.

Die prozentuale Erhöhung des Gasbildungswertes durch die Additivierung mit Guanidinoessigsäure ist bei den Strohsorten Weizen und Gerste mit 16,76 % und 11,95 % am größten. Anschließend folgt Maissilage mit 5,63 %. Bei Maiskörnern war die Erhöhung mit 1,73 % nur noch gering und bei Heu und Hafer (gepresst) nicht mehr vorhanden bzw. sogar leicht negativ.

Eine eindeutige Korrelation der Ergebnisse mit dem Gehalt von Lignin, Hemizellulose oder Zellulose aus der Literatur oder mit dem Energieinhalt des Pflanzenbestandteils selbst brachte kein klares Ergebnis. Da Lignin, Hemizellulose oder Zellulose komplexe Moleküle sind, die je nach Pflanzenart unterschiedlich strukturiert sind, wird vermutet, ohne an die Theorie gebunden zu sein, dass die Supplementierung mit Guanidinohydrochlorid, Guandinoessigsäure oder mit Arginin die Verdaubarkeit der Hemizellulosenstrukturen und /oder Zelluloseeinheiten von Stroh und Silomais beeinflusst, d.h. beschleunigt.

**Patentansprüche**

1. Verwendung einer Verbindung ausgewählt aus der Gruppe Guanidin, Guanidinoessigsäure und Arginin und deren Salze zur Erhöhung der Metabolischen Energie eines Futtermittels für Wiederkäuer enthaltend Stroh und/oder Mais; wobei die Verbindung dem Futtermittel in einer Menge von 0,01 bis 2 Gew.-% bezogen auf das Futtermittel zugegeben wird, **dadurch gekennzeichnet, dass** das Futtermittel mindestens 30 Gew.-% an Stroh und/oder Mais, bezogen auf das Gesamtgewicht des Futtermittels enthält.

2. Verwendung einer Verbindung ausgewählt aus der Gruppe Guanidin, Guanidinoessigsäure und Arginin und deren Salze zur Erhöhung der Metabolischen Energie eines Futtermittels enthaltend Stroh und/oder Mais im Verdauungstrakt von Wiederkäuern; wobei die Verbindung dem Futtermittel in einer Menge von 0,01 bis 2 Gew.-% bezogen auf das Futtermittel zugegeben wird, **dadurch gekennzeichnet, dass** das Futtermittel mindestens 30 Gew.-% an Stroh und/oder Mais, bezogen auf das Gesamtgewicht des Futtermittels enthält.

3. Verwendung nach einem der vorgenannten Ansprüche, **dadurch gekennzeichnet, dass** als Verbindung ein Salz der Verbindungen verwendet wird, wobei das Salz gewählt wird aus der Gruppe der Alkalisalze oder Erdalkalisalze oder Hydrochloride.

4. Verwendung nach einem der vorgenannten Ansprüche, **dadurch gekennzeichnet, dass** als Verbindung Guanidinoessigsäure oder ein Salz der Guanidinoessigsäure verwendet wird.

5. Verwendung nach einem der vorgenannten Ansprüche, **dadurch gekennzeichnet, dass** das Stroh ausgewählt wird aus der Gruppe Gerstenstroh, Weizenstroh, Haferstroh, Roggenstroh, Triticalestroh, Hirsestroh, und/ oder dass der Mais in Form von Kolbenmais, Liesch-Kolben-Schrot, Maisschrot, Grünmais, Silomais, Silomais aus der Ganzpflanze verwendet wird.

6. Verwendung nach einem der vorgenannten Ansprüche, **dadurch gekennzeichnet, dass** die Verbindung dem Futtermittel in einer Menge von 0,05 bis 1,5 Gew.-% bezogen auf das Futtermittel zugegeben wird.

7. Verwendung nach einem der vorgenannten Ansprüche, **dadurch gekennzeichnet, dass** die Verbindung dem Futtermittel in Form eines Granulats, Extrudats oder als Lösung beigemengt wird.

8. Verwendung nach einem der vorgenannten Ansprüche, **dadurch gekennzeichnet, dass** die Verbindung auf ein Trägermaterial aufgebracht ist.

9. Verwendung nach einem der vorgenannten Ansprüche, **dadurch gekennzeichnet, dass** der Wiederkäuer ein Rind, eine Milchkuh, ein Schaf oder eine Ziege, ist.

10. Verfahren zur Erhöhung der Metabolischen Energie eines Futtermittels für Wiederkäuer enthaltend Stroh und/oder Mais, umfassend die Schritte

- Bereitstellen eines Futtermittels für Wiederkäuer enthaltend Stroh und/oder Mais;
- Zugeben einer Verbindung ausgewählt aus der Gruppe Guanidin, Guanidinoessigsäure und Arginin und deren Salzen zum Futtermittel; wobei die Verbindung dem Futtermittel in einer Menge von 0,01 bis 2 Gew.-% bezogen auf das Futtermittel zugegeben wird;
- Verabreichen des Futtermittels an Wiederkäuer und
- Erhöhen der Metabolischen Energie des Futtermittels im Verdauungstrakt der Wiederkäuer;

**dadurch gekennzeichnet, dass**
das Futtermittel mindestens 30 Gew.-% an Stroh und/oder Mais, bezogen auf das Gesamtgewicht des Futtermittels enthält.

**Claims**

1. Use of a compound selected from the group of guanidine, guanidinoacetic acid and arginine and salts thereof for increasing the metabolic energy of a feed for ruminants containing straw and/or maize, wherein the compound is added to the feed in an amount of from 0.01 to 2% by weight based on the feed **characterized in that** the feed contains at least 30% by weight of straw and/or maize, based on the total weight of the feed.

2. Use of a compound selected from the group of guanidine, guanidinoacetic acid and arginine and salts thereof for increasing the metabolic energy of a feed containing straw and/or maize in the digestive tract of ruminants, wherein the compound is added to the feed in an amount of from 0.01 to 2% by weight based on the feed, **characterized in that** the feed contains at least 30% by weight of straw and/or maize, based on the total weight of the feed.

3. The use according to any one of the preceding claims, **characterized in that** a salt of the compounds is used as the compound, the salt being selected from the group of alkali salts or alkaline earth salts or hydrochlorides.

4. The use according to any one of the preceding claims, **characterized in that** guanidinoacetic acid or a salt of guanidinoacetic acid is used as the compound.

5. The use according to any one of the preceding claims, **characterized in that** the straw is selected from the group of barley straw, wheat straw, oat straw, rye straw, triticale straw, millet straw, and/or **in that** the maize is used in the form of cob maize, husk cob meal, maize meal, green maize, silage maize, silage maize from the whole plant.

6. The use according to any one of the preceding claims, **characterized in that** the compound is added to the feed in an amount of 0.05 to 1.5% by weight based on the feed.

7. The use according to any one of the preceding claims, **characterized in that** the compound is added to the feed in the form of a granulate, extrudate or solution.

8. The use according to any one of the preceding claims, **characterized in that** the compound is applied onto a carrier material.

9. The use according to any one of the preceding claims, **characterized in that** the ruminant is a bovine, a dairy cow, a sheep or a goat.

10. A method for increasing the metabolic energy of a feed for ruminants containing straw and/or maize, comprising the steps of

- providing a feed for ruminants containing straw and/or maize;
- adding a compound selected from the group of guanidine, guanidinoacetic acid and arginine and salts thereof to the feed; wherein the compound is added to the feed in an amount of from 0.01 to 2% by weight based on the feed;

- administering the feed to ruminants, and
- increasing the metabolic energy of the feed in the digestive tract of the ruminants;

**characterized in that**
the feed contains at least 30% by weight of straw and/or maize based on the total weight of the feed.


**Revendications**

1. Utilisation d'un composé choisi dans le groupe comprenant la guanidine, l'acide guanidinoacétique et l'arginine et leurs sels pour augmenter l'énergie métabolique d'un aliment pour ruminants contenant de la paille et/ou du maïs ; ledit composé étant ajouté à l'aliment en une quantité de 0,01 à 2 % en poids par rapport à l'aliment, **caractérisée en ce que** l'aliment contient au moins 30 % en poids de paille et/ou de maïs par rapport au poids total de l'aliment.

2. Utilisation d'un composé choisi dans le groupe comprenant la guanidine, l'acide guanidinoacétique et l'arginine et leurs sels pour augmenter l'énergie métabolique d'un aliment contenant de la paille et/ou du maïs dans le tractus digestif des ruminants ; ledit composé étant ajouté à l'aliment en une quantité de 0,01 à 2 % en poids par rapport à l'aliment, **caractérisée en ce que** l'aliment contient au moins 30 % en poids de paille et/ou de maïs par rapport au poids total de l'aliment.

3. Utilisation selon l'une des revendications précédentes, **caractérisée en ce que** l'on utilise comme composé un sel desdits composés, ledit sel étant choisi dans le groupe des sels alcalins ou alcalino-terreux ou des chlorhydrates.

4. Utilisation selon l'une des revendications précédentes, **caractérisée en ce que** l'on utilise comme composé l'acide guanidinoacétique ou un sel de l'acide guanidinoacétique.

5. Utilisation selon l'une des revendications précédentes, **caractérisée en ce que** la paille est choisie dans le groupe comprenant la paille d'orge, la paille de blé, la paille d'avoine, la paille de seigle, la paille de triticale, la paille de millet, et/ou **en ce que** le maïs est utilisé sous forme de maïs en épi, de maïs en épi de Liesch, de maïs concassé, de maïs vert, de maïs d'ensilage, de maïs d'ensilage de la plante entière.

6. Utilisation selon l'une des revendications précédentes, **caractérisée en ce que** le composé est ajouté à l'aliment en une quantité de 0,05 à 1,5 % en poids par rapport à l'aliment.

7. Utilisation selon l'une des revendications précédentes, **caractérisée en ce que** le composé est ajouté à l'aliment sous forme de granulés, d'extrudés ou de solution.

8. Utilisation selon l'une des revendications précédentes, **caractérisée en ce que** le composé est appliqué sur un matériau support.

9. Utilisation selon l'une des revendications précédentes, **caractérisée en ce que** le ruminant est un bovin, une vache laitière, un ovin ou un caprin.

10. Procédé pour augmenter l'énergie métabolique d'un aliment pour ruminants contenant de la paille et/ou du maïs, comprenant les étapes consistant à :

    - fournir un aliment pour ruminants contenant de la paille et/ou du maïs ;
    - ajouter à l'aliment un composé choisi dans le groupe constitué par la guanidine, l'acide guanidinoacétique et l'arginine et leurs sels ; ledit composé étant ajouté à l'aliment en une quantité de 0,01 à 2 % en poids par rapport à l'aliment ;
    - administrer l'aliment à des ruminants ; et
    - augmenter l'énergie métabolique de l'aliment dans le tractus digestif des ruminants ;

    **caractérisé en ce que** l'aliment contient au moins 30 % en poids de paille et/ou de maïs par rapport au poids total de l'aliment.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 738131
- EP 1758463 B1
- US 8501810 B2
- US 3681504 A
- CN 105876185 A
- EP 2939545 B1
- EP 3479700 A1

**In der Beschreibung aufgeführte Nicht-Patentliteratur**

- *CHEMICAL ABSTRACTS*, 352-97-6
- *CHEMICAL ABSTRACTS*, 74-79-3
- *CHEMICAL ABSTRACTS*, 157-06-2
- *CHEMICAL ABSTRACTS*, 7200-25-1
- *CHEMICAL ABSTRACTS*, 113-00-8
- *CHEMICAL ABSTRACTS*, 50-01-1
- *CHEMICAL ABSTRACTS*, 80-70-6
- *CHEMICAL ABSTRACTS*, 6020-87-7